(19) Europäisches Patentamt

European Patent Office

Office européen des brevets

(11) EP 1 300 307 B1

(12) **EUROPEAN PATENT SPECIFICATION**

(45) Date of publication and mention
of the grant of the patent:
**21.09.2005 Bulletin 2005/38**

(51) Int Cl.⁷: $B60T\ 7/10$

(21) Application number: **02254443.1**

(22) Date of filing: **25.06.2002**

(54) **Electric parking brake**

Elektrische Feststellbremse

Frein de stationnement électrique

(84) Designated Contracting States:
**DE FR**

(30) Priority: **28.06.2001 GB 0115745**

(43) Date of publication of application:
**09.04.2003 Bulletin 2003/15**

(73) Proprietor: **Ford Global Technologies, LLC**
**Michigan 48126-2490 (US)**

(72) Inventors:
• **Bennett, Peter John**
**Wolston, Coventry, CV8 3JJ (GB)**
• **Perkins, Simon Rouven**
**Coventry, CV6 1GE (GB)**

(74) Representative: **Farrow, Robert Michael et al**
**Land Rover,**
**Patent Department 53G 16/4,**
**Banbury Road,**
**Lighthorne**
**Warwick CV35 0RG (GB)**

(56) References cited:
**DE-A- 19 849 799**      **US-A- 3 684 049**
**US-B1- 6 246 944**

• **PATENT ABSTRACTS OF JAPAN vol. 010, no.**
**323 (M-531), 5 November 1986 (1986-11-05) & JP**
**61 129356 A (HINO MOTORS LTD), 17 June 1986**
**(1986-06-17)**

**Description**

The present invention relates to an electrically powered parking brake. In particular, the present invention relates to a system and method for controlling the parking brake for a vehicle as it pulls away from rest.

Almost all vehicles have a parking brake mechanism, and most of these vehicles have a hand lever or foot activated lever for actuating the parking brake mechanism. Typically, these levers are attached to a cable and cause displacement of the cable and operation of the attached parking brake mechanism.

The mechanisms underlying vehicle technology are constantly revised and updated in light of consumer preferences, vehicle presentation, packaging, marketing and increased safety obligations. In line with this, electric parking brake systems have been proposed as an alternative to the conventional manual parking brake mechanism. These have comprised an electric control means to signal the application and release of the parking brake mechanism in response to a predetermined combination of vehicle operating conditions.

US6246944 is considered to be the closest prior art and discloses an apparatus for controlling the brake of a vehicle, which can bring the vehicle to a halt, or starts it, only by the action of the accelerator without operating the brake pedal. The brakes are applied when the vehicle speed detected by a speed detector becomes a predetermined threshold value or less. The operation of the brakes is turned off when a load detected by a load detector becomes larger than a load operated by a load computer.

One electric parking brake assembly discloses a system whereby the parking brake is actuated on depression of the foot brake together with a signal that the vehicle is stationary. Another assembly suggests a system whereby the parking brake is actuated by a combination of foot brake application and push button operation. In such disclosures the parking brake is de-actuated by accelerator depression and/or clutch depression and/or shift gear selection. In an arrangement described in US 6,246,944 a brake release point is determined on the basis of inputs from sensors which detect acceleration of the vehicle and a loading on an output shaft. None of these defining operating conditions clearly and unambiguously reflect the status and intention of the driver to pull away from rest.

It is an object of the present invention to provide an electric parking brake control system for a manual transmission vehicle that operates automatically to release the park brake as the driver initiates a pull away driving sequence. It is another object of the present invention to provide an electric parking brake control system that ensures maximised safety for the driver. It is yet another object of the invention to provide an electric parking brake control system that provides a sensitive release of the park brake in response to the driver's driving style and parking conditions.

Accordingly, in one aspect the invention provides an electric parking brake control system for a vehicle, said system comprising an electric park brake (EPB) mechanism for applying a park brake force to the vehicle and an EPB control module, wherein the EPB control module is adapted to receive signals indicating vehicle operating conditions consisting of:-

(i) positive displacement of the vehicle throttle; and
(ii) vehicle engine speed greater than idle; and
(iii) vehicle engine loading as detected by a significant loss in proportionality between measured engine torque and measured engine acceleration, and to release the park brake force exerted by the EPB mechanism when all said signals have been received.

It will be understood to a person skilled in the art that when the engine is unloaded, the torque produced by the clutch is zero and the rotational acceleration can be considered substantially proportional to the torque produced by the engine (see full description *infra*). However, slight variations may occur and therefore the loss in proportionality must be significant before engine loading is inferred. Typically, the loss in proportionality must be maintained for a minimum predetermined time before engine loading is inferred.

The precise thresholds for each parameter will be specific to the type of vehicle to which the EPB system is applied.

For this assumption to be valid, the engine must be running in an error free condition. If errors have been detected then the engine management system may have some mechanism by which it establishes the validity of the critical criteria and notify the EPB system accordingly.

Thus preferably, the system further comprises an error management system.

Preferably, the electric parking brake control system further comprises a manual override mechanism.

In one embodiment, the electric parking brake control system further comprises an inclination sensor to adjust the threshold engine torque and/or the loss in proportionality between measured engine torque and measured engine acceleration, at which the park brake force is released.

Thus the system can be fine tuned to adjust for parking conditions, i.e. whether on a flat surface or on a hill.

In another aspect, the invention provides a vehicle comprising an electric parking brake control system as defined *supra*.

In still another aspect, the invention provides a method of releasing a park brake force from a vehicle comprising the use of an electric park brake system as described *supra*.

The invention will now be described further with reference to the accompanying drawings, in which:-

Fig. 1 shows a graph of the throttle pedal position against engine speed (revolutions);
Fig. 2 shows a graph of the relationship between the estimated engine torque and engine acceleration for a free running engine with gradual throttle application (between 1 and 3 seconds) and rapid release.
Fig. 3 shows the relationship between estimated engine torque and engine acceleration;
Fig. 4 shows the relationship between clutch pedal position and engine speed; and,
Fig. 5 shows a system diagram of an EPB system in accordance with one aspect of the invention.

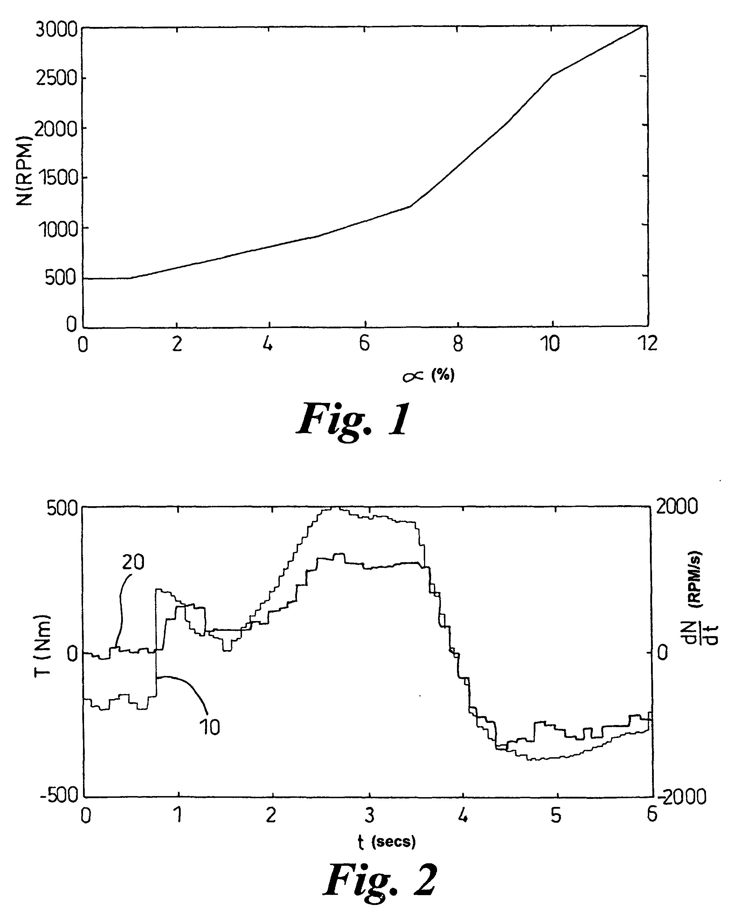

Referring now to the figures, Fig. 1 defines a graph of unloaded steady state engine speed N in revolution per minute (RPM) plotted against throttle pedal position $\alpha$ using data captured over a particular time period.

Using data from the same experiment, Fig. 2 is a plot of estimated engine torque T (curve 10) and engine acceleration $\frac{dN}{dt}$ (curve 20) against time t for a free running engine with gradual throttle application (between 1 and 3 seconds) followed by rapid release. The graph demonstrates that after initial throttle application the relationship between torque and acceleration is approximately proportional with very little lag.

The traces shown in Fig. 2 reflect the theoretical relationship between acceleration and torque as follows:-

$$\frac{dN}{dt} = \frac{T}{I}$$

where I is the inertia of the engine.

The inertia I of the engine is a constant for any one vehicle and therefore the rotational acceleration $\frac{dN}{dt}$ can be considered proportional to the net torque. The net torque is equal to the torque produced by the engine less the torque produced by the clutch. Hence, when the engine is unloaded, the torque produced by the clutch is zero and the rotational acceleration can be considered proportional to the torque produced by the engine.

With conventional vehicle manual clutch operation systems, a lever (assumed to be a foot pedal in the description *infra*) is operated to cause the clutch to move between a position of fully disengaged to fully engaged. As the lever is moved from the disengaged to the fully engaged position, the clutch plates will at some point start to transmit torque from the engine through to the transmission. This point is known as the 'bite-point' of the clutch.

When the clutch reaches the bite-point the relationship defined *supra* is no longer valid as the additional load placed on the engine by the transmission and/or driveline and/or vehicle will result in reduced engine rotational acceleration for a given torque produced.

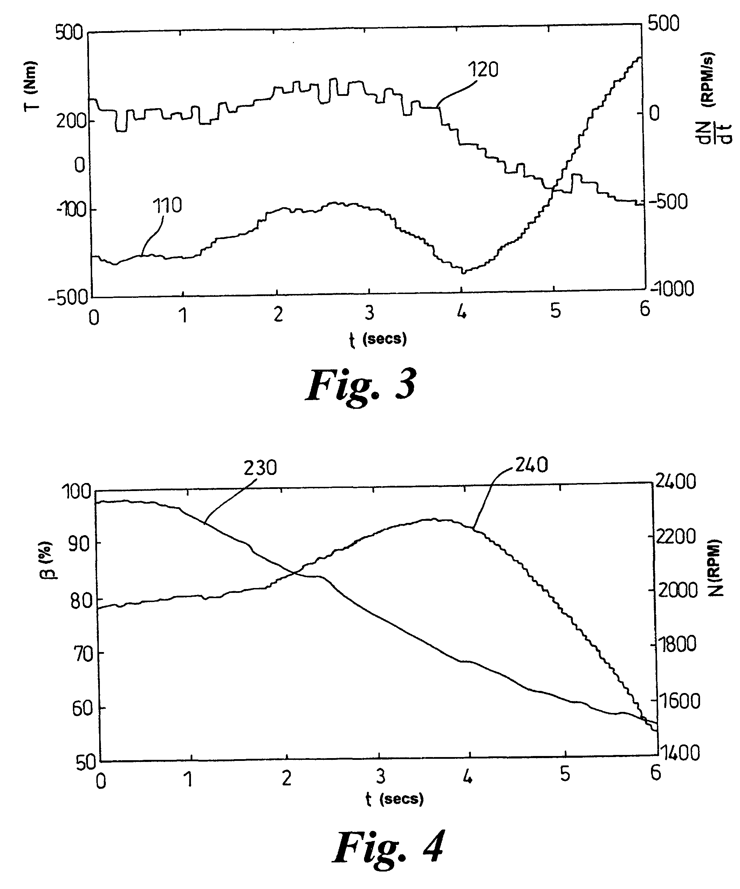

Fig. 3 shows the relationship between estimated engine torque T (curve 110) and engine acceleration $\frac{dN}{dt}$ (curve 120) as the clutch reaches the biting point (65% at approximately 4 seconds). The graph illustrates that as soon as the clutch starts to bite the proportional relationship between torque and acceleration is no longer applicable and hence engine loading may be implied. When the EPB control module detects engine loading in this way, the module will signal for the park brake to be released. From the same experiment, the relationship between clutch pedal position $\beta$ (curve 230) and engine speed N (curve 240) at the biting point is illustrated in Fig. 4.

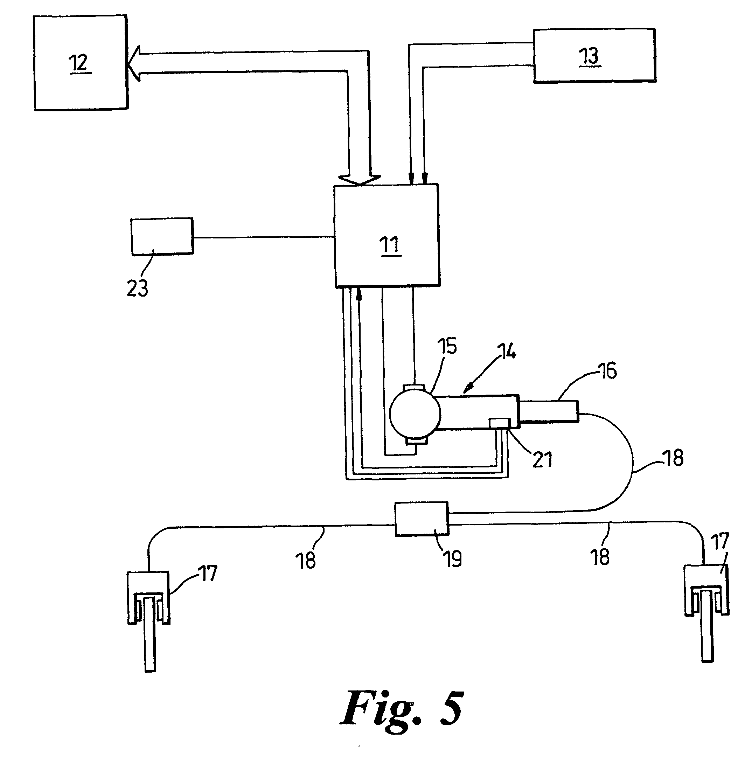

Fig. 5 illustrates a system diagram embodying one example of how the system may be implemented. The EPB control module 11 interacts with (or is part of) an engine management unit 12 that detects, *inter alia*, engine torque, engine acceleration and engine speed and has a manual control through an EPB Switch 13. An EPB actuator 14 comprising an electric motor 15 and leadscrew 16 is connected to brakes 17 through cables 18 and a mechanical force splitter 19. A transducer 21 provides a position feedback signal to the EPB control module 11. The EPB switch 13 can provide a manual override to apply or release the EPB and an inclination sensor 23 can be used to adjust the threshold of the loss in proportionately between measured engine torque and measured engine acceleration at which the park brake force is released.

## Claims

1. An electric parking brake control system for a vehicle, said system comprising an electric park brake (EPB) mechanism (14) for applying a park brake force to the vehicle and an EPB control module (11), wherein the EPB control module (11) is adapted to receive signals indicating vehicle operating conditions consisting of:-

   (i) positive displacement of the vehicle throttle;
   (ii) vehicle engine speed greater than idle; and
   (iii) vehicle engine loading as defined by a significant loss in proportionality between measured engine torque and measured engine acceleration, and to release the park brake force exerted by the EPB mechanism (14) when all said signals have been received.

2. An electric parking brake control system according to claim 1 further comprising an error management system.

3. An electric parking brake control system according to either one of claims 1 or 2 further comprising a manual override mechanism (13).

4.   An electric parking brake control system according to any one of the preceding claims further comprising an inclination sensor (23) adapted to adjust a threshold engine torque and/or a threshold of the loss in proportionality between measured engine torque and measured engine acceleration, at which the park brake force is released.

5.   A vehicle comprising an electric parking brake control system according to any one of the preceding claims.

6.   A method of releasing a park brake force from a vehicle including the steps of detecting operating conditions of the vehicle comprising;

  (i) positive displacement of the vehicle throttle,
  (ii) vehicle engine speed greater than idle,
  (iii) vehicle engine loading as defined by a significant loss in proportionality between measured engine torque and measured engine acceleration, and,

releasing the park brake force when all said operating conditions have been detected.

7.   A method according to claim 6 in which detecting vehicle engine loading comprises detecting that the loss of proportionality has been maintained for a minimum predetermined time.

**Patentansprüche**

1.   Elektrisches Feststellbremsensteuerungssystem für ein Fahrzeug, wobei das System einen elektrischen Feststellbremsen-(EPB)-Mechanismus (14) zum Ausüben einer Feststellbremsenkraft auf das Fahrzeug sowie ein EPB-Steuerungsmodul (11) umfaßt, wobei das EPB-Steuerungsmodul (11) so ausgeführt ist, daß es Signale empfängt, die Fahrzeugbetriebsbedingungen anzeigen, die aus folgenden Bedingungen bestehen:

  i) Positive Verschiebung der Fahrzeugdrosselklappe;
  ii) Fahrzeugmotordrehzahl liegt über der Leerlaufdrehzahl; und
  iii) Fahrzeugmotorbelastung, wie durch einen wesentlichen Verlust an Proportionalität zwischen gemessenem Motordrehmoment und gemessener Motorbeschleunigung ermittelt, um die vom EPB-Mechanismus (14) ausgeübte Feststellbremsenkraft freizugeben, wenn alle diese Signale empfangen worden sind.

2.   Elektrisches Feststellbremsensteuerungssystem nach Anspruch 1, das weiterhin ein Fehlermanagementsystem umfaßt.

3.   Elektrisches Feststellbremsensteuerungssystem nach einem der Ansprüche 1 oder 2, das weiterhin einen manuellen Freilaufmechanismus (13) umfaßt.

4.   Elektrisches Feststellbremsensteuerungssystem nach einem der vorstehend aufgeführten Ansprüche, das weiterhin einen Neigungssensor (23) umfaßt, der so ausgeführt ist, daß ein Motordrehmomentgrenzwert und/oder ein Grenzwert für den Verlust an Proportionalität zwischen gemessenem Motordrehmoment und gemessener Motorbeschleunigung, bei dem die Feststellbremsenkraft freigegeben wird, eingestellt werden kann.

5.   Fahrzeug, das ein elektrisches Feststellbremsensteuerungssystem nach einem der vorstehend aufgeführten Ansprüche umfaßt.

6.   Verfahren zur Freigabe einer Feststellbremsenkraft an einem Fahrzeug, das die Schritte des Ermittelns von Fahrzeugbetriebsbedingungen, wobei die Bedingungen folgendes umfassen:

  i) Positive Verschiebung der Fahrzeugdrosselklappe;
  ii) Fahrzeugmotordrehzahl liegt über der Leerlaufdrehzahl; und
  iii) Fahrzeugmotorbelastung, wie durch einen wesentlichen Verlust an Proportionalität zwischen gemessenem Motordrehmoment und gemessener Motorbeschleunigung ermittelt; sowie des Freigebens der Feststellbremsenkraft beinhaltet, wenn alle diese Betriebsbedingungen ermittelt worden sind.

7.   Verfahren nach Anspruch 6, bei dem das Ermitteln der Fahrzeugmotorbelastung das Ermitteln umfaßt, daß der Verlust an Proportionalität für eine vorbestimmte Mindestzeitspanne aufrechterhalten wird.

**Revendications**

1.   Système de commande de frein de stationnement électrique pour un véhicule, ledit système comprenant un mécanisme de frein de stationnement électrique (mécanisme EPB) (14) pour appliquer une force de freinage de stationnement au véhicule et un module de commande de frein de stationnement électrique (module de commande EPB) (11), dans lequel le module de commande EPB (11) est adapté pour recevoir les signaux indiquant les conditions de fonctionnement du véhicule constituées par :

(i) le déplacement positif de l'accélérateur du véhicule ;

(ii) le régime du moteur du véhicule au-dessus du régime de ralenti ; et

(iii) le chargement du moteur du véhicule tel que défini par une perte significative de proportionnalité entre le couple du moteur mesuré et l'accélération du moteur mesurée, et pour desserrer la force de freinage exercée par le mécanisme EPB (14) quand tous lesdits signaux ont été reçus.

2. Système de commande de frein de stationnement électrique selon la revendication 1, comprenant en outre un système de gestion d'erreurs.

3. Système de commande de frein de stationnement électrique selon l'une quelconque de la revendication 1 ou de la revendication 2 comprenant en outre un mécanisme de mise en dérivation au mode manuel (13).

4. Système de commande de frein de stationnement électrique selon l'une quelconque des revendications précédentes comprenant un capteur d'inclinaison (23) adapté pour ajuster une valeur limite de couple du moteur et/ou une valeur limite de perte de proportionnalité entre le couple du moteur mesuré et l'accélération du moteur mesurée, auxquelles la force de freinage de stationnement est desserrée.

5. Véhicule comprenant un système de commande de frein de stationnement électrique selon l'une quelconque des revendications précédentes.

6. Procédé de desserrage de la force de freinage de stationnement d'un véhicule comprenant les étapes :

de détection des conditions de fonctionnement du véhicule constituées par ;

(i) le déplacement positif de l'accélérateur du véhicule

(ii) le régime du moteur du véhicule au-dessus du régime de ralenti ; et

(iii) le chargement du moteur du véhicule tel que défini par une perte significative de proportionnalité entre le couple du moteur mesuré et l'accélération du moteur mesurée, et,

de desserrage de la force de freinage de stationnement quand toutes lesdites conditions de fonctionnement ont été détectées.

7. Procédé selon la revendication 6, dans lequel la détection du chargement du moteur du véhicule comprend la détection du fait que la perte de proportionnalité a été maintenue pendant une période de temps minimum prédéterminée.

*Fig. 1*

*Fig. 2*

**Fig. 3**

**Fig. 4**

**Fig. 5**